# EUROPEAN PATENT APPLICATION

(11) **EP 4 410 541 A1**
(43) Date of publication of application: **07.08.2024**
(21) Application number: 22872231.0
(22) Date of filing: 27.09.2022
(51) Int. Cl.: B32B 17/10, G02B 27/01, B60J 1/00, B60J 1/02

(54) **LAMINATED GLASS FOR HEAD-UP DISPLAY AND HEAD-UP DISPLAY SYSTEM**

(30) Priority: 27.09.2021 CN 202111136596
(71) Applicant: Fuyao Glass Industry Group Co., Ltd., Fuzhou, Fujian 350300 (CN)
(72) Inventor: TU, Lele, Fuzhou, Fujian 350300 (CN); LI, Yang, Fuzhou, Fujian 350300 (CN); GAO, Lianxiang, Fuzhou, Fujian 350300 (CN)
(74) Representative: Mewburn Ellis LLP
(86) International application number: PCT/CN2022/121537
(87) International publication number: WO 2023/046188

(57) **Abstract**

A laminated glass for head up display (HUD) and an HUD system are provided in the disclosure. The laminated glass includes a first glass panel, a second glass panel, and a polymer interlayer. The laminated glass has a first HUD area and a second HUD area. A projection distance for projection display from a projection light source to the first HUD area ranges from 1 meter to 5 meters, and a projection distance for projection display from the projection light source to the second HUD area is greater than or equal to 7 meters. The first HUD area has a wedge-shaped cross section and a first wedge angle, where an upper side of the wedge-shaped cross section is thicker than a lower side of the wedge-shaped cross section. The second HUD area has a wedge-shaped cross section and a second wedge angle, where an upper side of the wedge-shaped cross section is thicker than a lower side of the wedge-shaped cross section. The first HUD area is adjacent to the second HUD area, and the first wedge angle is greater than the second wedge angle. In the disclosure, the first HUD area and the second HUD area are provided, so that both an image of short-range display and an image of long-range display may be displayed without ghosting.

## Description

### CROSS-REFERENCE TO RELATED APPLICATION(S)

This application claims priority to Chinese Patent Application No. 202111136596.4, filed September 27, 2021 and entitled "LAMINATED GLASS FOR HEAD UP DISPLAY AND HEAD UP DISPLAY SYSTEM", the entire disclosure of which is incorporated herein by reference.

### TECHNICAL FIELD

The disclosure relates to the field of vehicle glass, and in particular to a laminated glass for head up display (HUD) and an HUD system.

### BACKGROUND

Vehicles are increasingly configured with head up display (HUD) systems, so that a driver can access various data of the vehicle without having to look down, thereby effectively preventing traffic accidents caused by the driver looking down to check instruments. Augmented reality (AR) is to timely superimpose a digital model onto a real scene, essentially annotating the real scene. Augmented reality-head up display (AR-HUD) is safe driving-based timely display of dynamic navigation, road safety warning, business district information, and so on during driving. AR-HUD generally requires that a projection distance is greater than or equal to 7 meters, and even requires that the projection distance is greater than or equal to 10 meters. With the development of automotive electronics and information technologies, information needing to be displayed is increasing, both short-range display and long-range display need to be performed on a windshield, the short-range display is windshield-HUD (W-HUD) of static information such as driving speed, and the long-range display is the AR-HUD. A prior structure capable of performing both short-range display and long-range display is relatively complex and tends to produce ghosting in a displayed image.

### SUMMARY

The disclosure aims to provide a laminated glass for head up display (HUD) and an HUD system, so that both an image of short-range display and an image of long-range display may be displayed without ghosting.

A laminated glass for HUD is provided in the disclosure. The laminated glass includes a first glass panel, a second glass panel, and a polymer interlayer sandwiched between the first glass panel and the second glass panel. The laminated glass has an upper side and a lower side. The laminated glass has a first HUD area and a second HUD area arranged in a direction from the lower side of the laminated glass to the upper side of the laminated glass, and the first HUD area and the second HUD area are both used for projection display of a projection light source. A projection distance for projection display from the projection light source to the first HUD area ranges from 1 meter to 5 meters, and a projection distance for projection display from the projection light source to the second HUD area is greater than or equal to 7 meters. The first HUD area has a wedge-shaped cross section and a first wedge angle, where an upper side of the wedge-shaped cross section is thicker than a lower side of the wedge-shaped cross section. The second HUD area has a wedge-shaped cross section and a second wedge angle, where an upper side of the wedge-shaped cross section is thicker than a lower side of the wedge-shaped cross section. The first HUD area is adjacent to the second HUD area, and the first wedge angle is greater than the second wedge angle.

A difference between the first wedge angle and the second wedge angle ranges from 0.05 mrad to 0.2 mrad.

The first wedge angle is greater than or equal to 0.3 mrad, and the second wedge angle is greater than or equal to 0.05 mrad and less than 0.3 mrad.

The laminated glass further has an information collection area, where the information collection area defines an opening area for information collection of an information collection system. The information collection area is disposed above and adjacent to the second HUD area. The information collection area has a reverse wedge-shaped cross section and a third wedge angle, where an upper side of the reverse wedge-shaped cross section is thinner than a lower side of the reverse wedge-shaped cross section, and the third wedge angle is greater than or equal to - 0.05 mrad and less than 0 mrad.

The laminated glass further has an information collection area, where the information collection area defines an opening area for information collection of an information collection system. The information collection area is disposed above and adjacent to the second HUD area. The information collection area has a uniform-thickness cross section, where a thickness of an upper side of the uniform-thickness cross section is equal to a thickness of a lower side of the uniform-thickness cross section.

The laminated glass further has an information collection area, where the information collection area defines an opening area for information collection of an information collection system. The information collection area is disposed above and adjacent to the second HUD area. The information collection area has a wedge-shaped cross section and a third wedge angle, where an upper side of the wedge-shaped cross section is thicker than a lower side of the wedge-shaped cross section. The third wedge angle is greater than 0 mrad and less than or equal to 0.05 mrad, and the second wedge angle is greater than the third wedge angle.

The first glass panel has a first surface and a second surface opposite the first surface, and the second surface faces the polymer interlayer. The second glass panel has a third surface and a fourth surface opposite the third surface, and the third surface faces the polymer interlayer. The laminated glass further includes a masking layer, where the masking layer includes a first masking layer and/or a second masking layer. The first masking layer is attached to a periphery of the second surface, and the second masking layer is attached to a periphery of the third surface or a periphery of the fourth surface. The first masking layer defines a first window, the second masking layer defines a second window, and the first window or the second window is used to provide an opening area for information collection of an information collection system.

In the disclosure, "A and/or B" denotes three schemes, i.e., "A and B", "A alone", and "B alone".

The laminated glass includes the first masking layer and the second masking layer, and a size of the first window is larger than a size of an opening required by the information collection system in at least one direction. A size of the second window is equal to the size of the opening required by the information collection system, or the size of the second window is larger than the size of the opening required by the information collection system in at least one direction.

The size of the first window is larger than the size of the opening required by the information collection system in at least one direction by a minimum distance greater than or equal to 20 mm. The size of the second window is larger than the size of the opening required by the information collection system in at least one direction by a minimum distance greater than or equal to 20 mm.

The first glass panel has a first surface and a second surface opposite the first surface, the second surface faces the polymer interlayer, the second glass panel has a third surface and a fourth surface opposite the third surface, and the third surface faces the polymer interlayer. The laminated glass further includes a transparent conductive film, where the transparent conductive film is disposed on the second surface of the first glass panel facing the polymer interlayer or on the third surface of the second glass panel facing the polymer interlayer.

"Opposite" surfaces refer to surfaces that are opposite to each other and away from each other.

The laminated glass further includes an external power supply, where the external power supply is electrically connected to the transparent conductive film.

The polymer interlayer includes at least two polymer layers, and a content of plasticizer in a first polymer layer of the at least two polymer layers is higher than a content of plasticizer in a second polymer layer of the at least two polymer layers.

A functional composition is added to the polymer interlayer. The functional composition in the disclosure includes, but is not limited to, a colorant, an infrared absorber, an ultraviolet absorber, etc.

The first glass panel and the second glass panel are bent glass panels.

The second glass panel has a thickness less than or equal to 1.8 mm.

The second glass panel has the thickness less than or equal to 1.1 mm.

A light area of the first HUD area where the projection light source is configured to project light onto and a light area of the second HUD area where the projection light source is configured to project light onto partially overlap to form an overlapping area, where the overlapping area has a height less than 150 mm in a direction from the upper side of the laminated glass to the lower side of the laminated glass.

The height of the overlapping area is greater than 10 mm in the direction from the upper side to the lower side.

An HUD system is further provided in the disclosure. The HUD system includes a projection light source and the laminated glass. The projection light source is configured to generate at least one light beam, and the at least one light beam is projected onto the laminated glass to form at least one projection display image.

The projection light source is configured to generate at least a first light beam and a second light beam, where a projection distance for the first light beam is not equal to a projection distance for the second light beam. The first light beam is projected onto the first HUD area to form a first HUD image, and the second light beam is projected onto the second HUD area to form a second HUD image.

The HUD system further includes an information collection system, and the laminated glass further has an information collection area. The information collection area is disposed above and adjacent to the second HUD area, and the information collection system is configured to perform information collection via the information collection area.

In summary, the laminated glass provided in the disclosure has the first HUD area having the first wedge angle and the second HUD area having the second wedge angle, so that the projection light source can perform short-range display when the projection light source projects light onto the first HUD area, the short-range display is windshield-HUD (W-HUD), the projection light source can perform long-range display when the projection light source projects light onto the second HUD area, and the long-range display is AR-HUD. With the aid of a wedge angle in the first HUD area and a wedge angle in the second HUD area, an image of the short-range display generated by light projection of the projection light source onto the first HUD area and an image of the long-range display generated by light projection of the projection light source onto the second HUD area may not be subject to ghosting.

### BRIEF DESCRIPTION OF THE DRAWINGS

In order to describe technical solutions in embodiments of the disclosure or in the related art more clearly, the following will give a brief introduction to accompanying drawings required for describing embodiments or the related art. Apparently, the accompanying drawings hereinafter described merely illustrate some embodiments of the disclosure. Based on these drawings, those of ordinary skill in the art can also obtain other drawings without creative effort.
FIG. 1 is a schematic cross-sectional structural view of a laminated glass for head up display (HUD) in an embodiment of the disclosure.
FIG. 2 is a schematic cross-sectional structural view of a laminated glass for HUD in another embodiment of the disclosure.
FIG. 3 is a schematic cross-sectional structural view of a laminated glass with a masking layer in an embodiment of the disclosure.
FIG. 4 is a schematic top view of a laminated glass in an embodiment of the disclosure.
FIG. 5 is a schematic top view of a first glass substrate having a first window of a laminated glass in an embodiment of the disclosure.
FIG. 6 is a schematic top view of a second glass substrate having a second window of a laminated glass in an embodiment of the disclosure.
FIG. 7 is a schematic top view of a first glass substrate having a first window of a laminated glass in another embodiment of the disclosure.
FIG. 8 is a schematic top view of a second glass substrate having a second window of a laminated glass in another embodiment of the disclosure.
FIG. 9 is a schematic top view of a laminated glass having two camera windows in an embodiment of the disclosure.
FIG. 10 is a schematic structural view of a laminated glass with a transparent conductive film in an embodiment of the disclosure.
FIG. 11 is a schematic structural view of a laminated glass with a transparent conductive film in another embodiment of the disclosure.
FIG. 12 is a schematic structural view of an HUD system in an embodiment of the disclosure.
FIG. 13 is a schematic diagram illustrating that a light area L1 of a laminated glass partially overlaps a light area L2 of a laminated glass in an embodiment of the disclosure.
FIG. 14 is a schematic diagram of a normal HUD image.
FIG. 15 is a schematic diagram of a deformed HUD image.

### DETAILED DESCRIPTION

The following will illustrate clearly and completely technical solutions of embodiments of the disclosure with reference to accompanying drawings of embodiments of the disclosure. Apparently, embodiments illustrated herein are merely some, rather than all embodiments, of the disclosure. Based on the embodiments of the disclosure, all other embodiments obtained by those of ordinary skill in the art without creative effort shall fall within the protection scope of the disclosure.

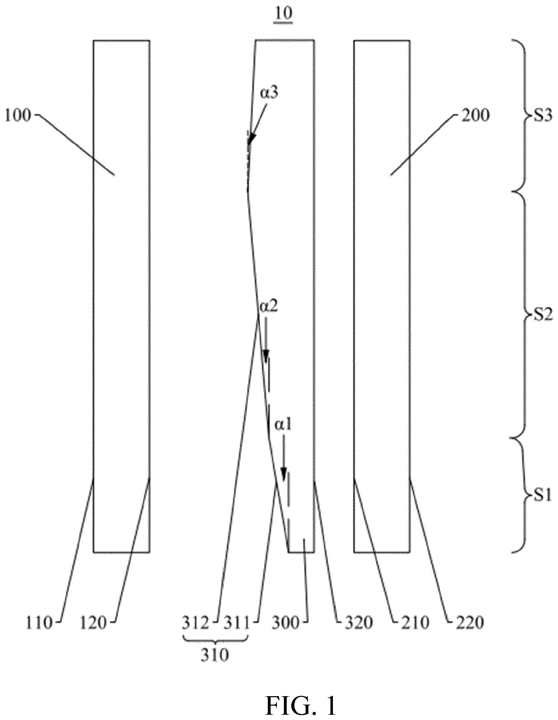

Referring to FIG. 1, a laminated glass 10 for head up display (HUD) is provided in embodiments of the disclosure. The laminated glass 10 includes a first glass panel 100, a second glass panel 200, and a polymer interlayer 300 sandwiched between the first glass panel 100 and the second glass panel 200.

The first glass panel 100 has a first surface 110 and a second surface 120. The first surface 110 is opposite to the second surface 120. The second surface 120 faces the polymer interlayer 300. The second glass panel 200 has a third surface 210 and a fourth surface 220. The third surface 210 is opposite to the fourth surface 220. The third surface 210 faces the polymer interlayer 300. In the laminated glass 10 of the embodiment, one surface of the polymer interlayer 300 is adhered and attached to the second surface 120 of the first glass panel 100, and the other surface of the polymer interlayer 300 is adhered and attached to the third surface 210 of the second glass panel 200.

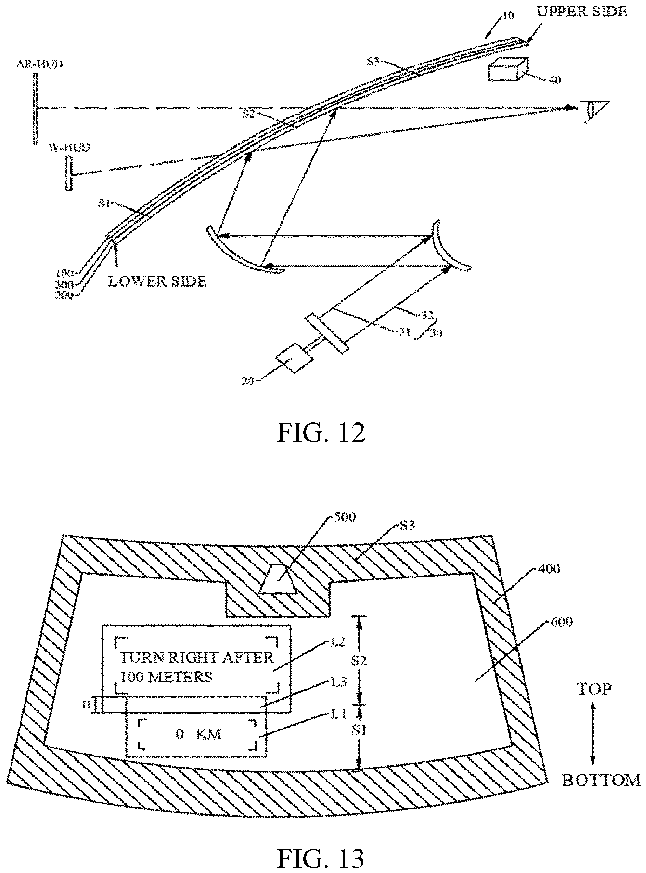

In the case where the laminated glass 10 for HUD is mounted to a vehicle, the first glass panel 100 serves as an outer glass, and the second glass panel 200 serves as an inner glass. The laminated glass 10 has an upper side and a lower side. As illustrated in FIG. 12, the upper side refers to a top of the laminated glass 10 in the case where the laminated glass 10 is mounted to the vehicle, and the lower side refers to a bottom of the laminated glass 10 in the case where the laminated glass 10 is mounted to the vehicle. The laminated glass 10 has a first HUD area S1 and a second HUD area S2 arranged in a direction from the lower side of the laminated glass 10 to the upper side of the laminated glass 10, and the first HUD area S1 and the second HUD area S2 are both used for projection display of a projection light source (not illustrated in the figures). A projection distance for projection display from the projection light source to the first HUD area S1 ranges from 1 meter to 5 meters, and a projection distance for projection display from the projection light source to the second HUD area S2 is greater than or equal to 7 meters. Referring to a cross section of the laminated glass 10 taken in a cross-sectional direction of the laminated glass 10, the first HUD area S1 has a wedge-shaped cross section and a first wedge angle α1, where an upper side of the wedge-shaped cross section is thicker than a lower side of the wedge-shaped cross section. The second HUD area S2 has a wedge-shaped cross section and a second wedge angle α2, where an upper side of the wedge-shaped cross section is thicker than a lower side of the wedge-shaped cross section. The first HUD area S 1 is adjacent to the second HUD area S2, and the first wedge angle α1 is greater than the second wedge angle α2. The cross section of the laminated glass 10 taken in the cross-sectional direction refers to a cross section of the laminated glass 10 taken in a thickness direction of the laminated glass 10.

The laminated glass 10 provided in embodiments of the disclosure has the first HUD area S1 having the first wedge angle α1 and the second HUD area S2 having the second wedge angle α2, so that the projection light source can perform short-range display when the projection light source projects light onto the first HUD area S1, the short-range display is windshield-HUD (W-HUD), the projection light source can perform long-range display when the projection light source projects light onto the second HUD area S2, and the long-range display is augmented reality-head up display (AR-HUD). With the aid of a wedge angle in the first HUD area S1 and a wedge angle in the second HUD area S2, an image of the short-range display generated by light projection of the projection light source onto the first HUD area S1 and an image of the long-range display generated by light projection of the projection light source onto the second HUD area S2 may not be subject to ghosting.

As an example, in the laminated glass 10 of FIG. 1, both the first wedge angle α1 and the second wedge angle α2 are constant. Alternatively, both the first wedge angle α1 and the second wedge angle α2 may be continuously variable. In the case where the first wedge angle α1 and the second wedge angle α2 are set to be constant, there are advantages of a simple production process, easy realization of mass production, and cost savings.

In an embodiment, as illustrated in FIG. 1, the polymer interlayer 300 has a first surface 310 and a second surface 320 opposite the first surface 310, where the second surface 120 faces the first surface 310, and the third surface 210 faces the second surface 320. The first surface 310 has multiple slopes, and the second surface 320 is a flat surface. The first surface 310 has a first wedge-shaped slope 311 and a second wedge-shaped slope 312. The first wedge-shaped slope 311 is adjacent to the second wedge-shaped slope 312. The first wedge-shaped slope 311 and the second surface 320 (where dotted lines illustrated in FIG. 1 are parallel to the second surface 320) cooperatively define the first wedge angle α1. The second wedge-shaped slope 312 and the second surface 320 cooperatively define the second wedge angle α2. The first wedge angle α1 is greater than the second wedge angle α2. In the laminated glass 10 of the embodiment, the second surface 120 of the first glass panel 100 is adhered and attached to the first surface 310 of the polymer interlayer 300, and the third surface 210 of the second glass panel 200 is adhered and attached to the second surface 320 of the polymer interlayer 300.

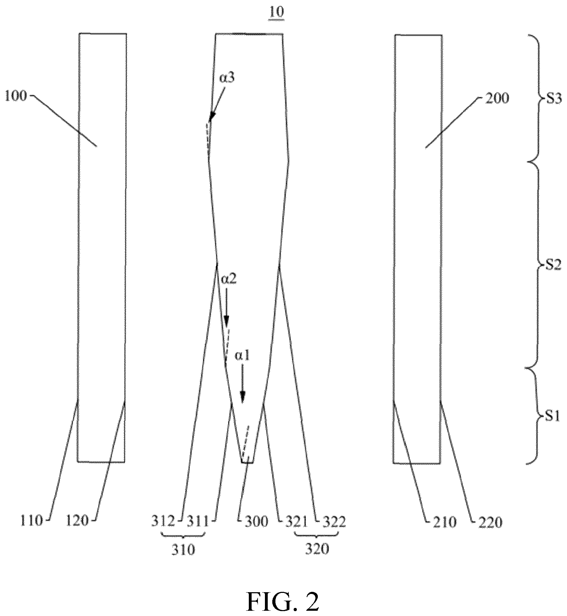

In another embodiment, as illustrated in FIG. 2, the polymer interlayer 300 has the first surface 310 and the second surface 320 opposite the first surface 310, where the second surface 120 faces the first surface 310, and the third surface 210 faces the second surface 320. The first surface 310 has multiple slopes, and the second surface 320 also has multiple slopes. The first surface 310 has the first wedge-shaped slope 311 and the second wedge-shaped slope 312. The second surface 320 has a third wedge-shaped slope 321 and a fourth wedge-shaped slope 322. The first wedge-shaped slope 311 and the third wedge-shaped slope 321 (where a bottom dotted line illustrated in FIG. 2 is parallel to the third wedge-shaped slope 321) cooperatively define the first wedge angle α1. The second wedge-shaped slope 312 and the fourth wedge-shaped slope 322 (a middle dotted line illustrated in FIG. 2 is parallel to the fourth wedge-shaped slope 322) cooperatively define the second wedge angle α2. The first wedge angle α1 is greater than the second wedge angle α2.

A material of the polymer interlayer 300 is typically polyvinyl butyral (PVB), so that the first glass panel 100 may be adhered and fixed to the second glass panel 200 with the aid of the polymer interlayer 300. It may be understood that the material of the polymer interlayer 300 of the disclosure is not limited thereto, and may be polycarbonate (PC), polyvinyl chloride (PVC), ethylene vinyl acetate (EVA), polyacrylate (PA), polymethyl methacrylate (PMMA), polyurethane (PUR), etc. In some embodiments, the polymer interlayer 300 includes at least two polymer layers, and a content of plasticizer in a first polymer layer of the at least two polymer layers is higher than a content of plasticizer in a second polymer layer of the at least two polymer layers, so that the laminated glass 10 with the polymer interlayer 300 may have a sound isolation effect.

In an embodiment, a functional composition is added to the polymer interlayer 300. The functional composition includes, but is not limited to, a colorant, an infrared absorber, an ultraviolet absorber, etc. For example, the colorant may be a dye. The colorant may be added to the polymer interlayer 300, so that a colored area may be formed in the polymer interlayer 300, where the colored area may serve as a shadow zone to reduce interference of sunlight to human eyes. The polymer interlayer 300 added with the infrared absorber and the ultraviolet absorber may have heat insulation and sun protection effects.

In an embodiment, a difference between the first wedge angle α1 of the first HUD area S1 and the second wedge angle α2 of the second HUD area S2 ranges from 0.05 mrad to 0.2 mrad, i.e., 0.05 mrad ≤ α1-α2 ≤ 0.2 mrad. By controlling the difference between the first wedge angle α1 and the second wedge angle α2, on the one hand, it is possible to make transition from the first wedge-shaped slope to the second wedge-shaped slope be significant, thereby ensuring a relatively good long-range display effect of the projection light source onto the second wedge-shaped slope, and on the other hand, it facilitates manufacture in terms of processes. In addition, the difference of the above range may not affect a transmittance variation of the polymer interlayer, thereby avoiding dizziness. In an embodiment, in the case where the polymer interlayer 300 is manufactured by means of extrusion, the polymer interlayer 300 with two wedge angles can be manufactured through a combination of two types of wedge-shaped rollers and flat rolls.

In an embodiment, the first wedge angle α1 of the first HUD area S1 is greater than or equal to 0.3 mrad, and the second wedge angle α2 of the second HUD area S2 is greater than or equal to 0.05 mrad and less than 0.3 mrad, i.e., α1 ≥ 0.3 mrad, and 0.05 mrad ≤ α2 < 0.3 mrad. In the case where the laminated glass 10 serves as a windshield of the vehicle, a range of the first wedge angle α1 and a range of the second wedge angle α2 may be set to match by taking factors such as body design and a mounting angle of the windshield into consideration. In some embodiments, α1 ≥ 0.3 mrad, and 0.05 mrad ≤ α2 < 0.3 mrad.

In an embodiment, the laminated glass 10 further has an information collection area S3. The information collection area S3 defines an opening area for information collection of an information collection system. The information collection area S3 is disposed above and adjacent to the second HUD area S2. Referring to the cross section of the laminated glass 10 taken in the cross-sectional direction of the laminated glass 10, the information collection area S3 has a reverse wedge cross section and a third wedge angle α3, where an upper side of the reverse wedge-shaped cross section is thinner than a lower side of the reverse wedge-shaped cross section. The third wedge angle α3 is greater than or equal to -0.05 mrad and less than 0 mrad.

In the embodiment, as illustrated in FIG. 1 and FIG. 2, the information collection area S3 of the laminated glass 10 has the reverse wedge-shaped cross section, where the upper side of the reverse wedge-shaped cross section is thinner than the lower side of the reverse wedge-shaped cross section, and the third wedge angle α3 is a reverse wedge angle. In the case where the laminated glass 10 serves as a windshield of the vehicle, the information collection system can collect external information of the vehicle to improve a safety performance and comfort of the vehicle during driving. In the disclosure, the information collection area S3 provided in the laminated glass 10 can define the opening area for information collection of the information collection system.

In a second embodiment, the information collection area S3 is disposed above and adjacent to the second HUD area S2. Referring to the cross section of the laminated glass 10 in the cross-sectional direction of the laminated glass 10, the information collection area S3 has a uniform-thickness cross section, where a thickness of an upper side of the uniform-thickness cross section is equal to a thickness of a lower side of the uniform-thickness cross section.

In a third embodiment, the information collection area S3 is disposed above and adjacent to the second HUD area S2. Referring to the cross section of the laminated glass 10 in the cross-sectional direction of the laminated glass 10, the information collection area S3 has a wedge-shaped cross section and a third wedge angle α3, where an upper side of the wedge-shaped cross section is thicker than a lower side of the wedge-shaped cross section. The third wedge angle is greater than 0 mrad and less than or equal to 0.05 mrad, and the second wedge angle α2 is greater than the third wedge angle α3.

In the case where two light rays from an object outside the vehicle are transmitted, along different paths, to the information collection system from the outside of the vehicle through the laminated glass 10, transmission may result in a double image or a ghosting image. Compared with the second embodiment and the third embodiment, in the embodiment, the third wedge angle α3 may be set to be a reverse wedge angle, so that a problem of a double image may be overcame, and a thickness of the laminated glass 10 may be reduced. The information collection system is a prior device, such as an electronic sensor, a camera, a radar, a communication device, etc., where the radar may be a LiDAR (light detection and ranging), and the electronic sensor may be a humidity sensor, a touch sensor, etc.

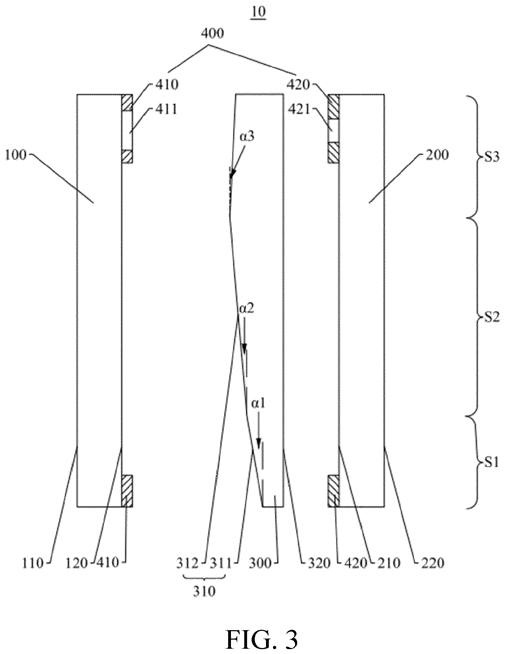

Referring to FIG. 3, in an embodiment, the laminated glass 10 further includes a masking layer 400. A material of the masking layer 400 is typically dark ink, so that the masking layer 400 can mask and protect interior components of the vehicle, preventing the interior components of the vehicle from aging and damage caused by direct sunlight, thereby prolonging a service life of the interior components of the vehicle. Meanwhile, the masking layer can shield the interior components of the vehicle to ensure overall aesthetics for external observation. In the disclosure, the masking layer 400 includes a first masking layer 410 and/or a second masking layer 420. That is, the masking layer 400 can consist of either the first masking layer 410 alone, the second masking layer 420 alone, or both the first masking layer 410 and the second masking layer 420. The first masking layer 410 is disposed on the second surface 120 of the first glass panel 100 close to the polymer interlayer 300 at a periphery of the second surface 120. The first masking layer 410 may be formed by printing dark ink at the periphery of the second surface 120. An area of the second surface 120 not covered by the first masking layer 410 may serve as a display area for light transmission and image display. The second masking layer 420 is disposed on the third surface 210 of the second glass panel 200 close to the polymer interlayer 300 at a periphery of the third surface 210. Alternatively, the second masking layer 420 is disposed on the fourth surface 220 of the second glass panel 200 opposite the third surface 210 at a periphery of the fourth surface 220. The second masking layer 420 can be formed by printing dark ink at the periphery of the third surface 210 or the periphery of the fourth surface 220. An area of the third surface 210 not covered by the second masking layer 420 or an area of the fourth surface 220 not covered by the second masking layer 420 may serve as a display area for light transmission and image display.

In the case where the masking layer 400 consists of the first masking layer 410 alone, the first masking layer 410 is solely disposed on the second surface 120 of the first glass panel 100. In the case where the masking layer 400 consists of the second masking layer 420 alone, the second masking layer 420 is solely disposed on the third surface 210 of the second glass panel 200 or the fourth surface 220 of the second glass panel 200. In the case where the masking layer 400 consists of both the first masking layer 410 and the second masking layer 420, the first masking layer 410 is disposed on the second surface 120 of the first glass panel 100, and the second masking layer 420 is disposed on the third surface 210 of the second glass panel 200 or the fourth surface 220 of the second glass panel 200. For example, in the laminated glass 10 as illustrated in FIG. 2, the first masking layer 410 is disposed on the second surface 120 and the second masking layer 420 is disposed on the third surface 210. The first masking layer 410 defines a first window 411 at an area of the first masking layer 410 corresponding to the information collection area S3. The second masking layer 420 defines a second window 421 at an area of the second masking layer 420 corresponding to the information collection area S3. In the case where the first glass panel 100, the polymer interlayer 300, and the second glass panel 200 are adhered together, a light ray passing through the first window 411 can pass through the polymer interlayer 300 and exit from the second window 421. The first window 411 and the second window 421 cooperatively define the opening area for the information collection area S3. In the example, the information collection system is a camera. In the case where the laminated glass 10 serves as a windshield of the vehicle, the first glass panel 100 serves as an outer glass, the first surface 110 of the first glass panel 100 faces the exterior of the vehicle, the second glass panel 200 serves as an inner glass, and the fourth surface 220 of the second glass panel 200 is located inside the vehicle. The camera is mounted to or near the fourth surface 220 via a holder. The first window 411 and the second window 421 cooperatively provide a camera window. When two light rays from an object outside the vehicle are incident through the first window 411 along different paths, the two light rays may then pass through the polymer interlayer 300 and exit from the second window 421, and eventually be collected by the camera. In the case where the information collection area S3 has the third wedge angle and the third wedge angle is a reverse wedge angle, the problem of a double image of the camera can be overcame. It may be understood that the information collection system may be an electronic sensor, a radar, a communication device, etc., where the radar may be a LiDAR, and the electronic sensor may be a humidity sensor, a touch sensor, etc.

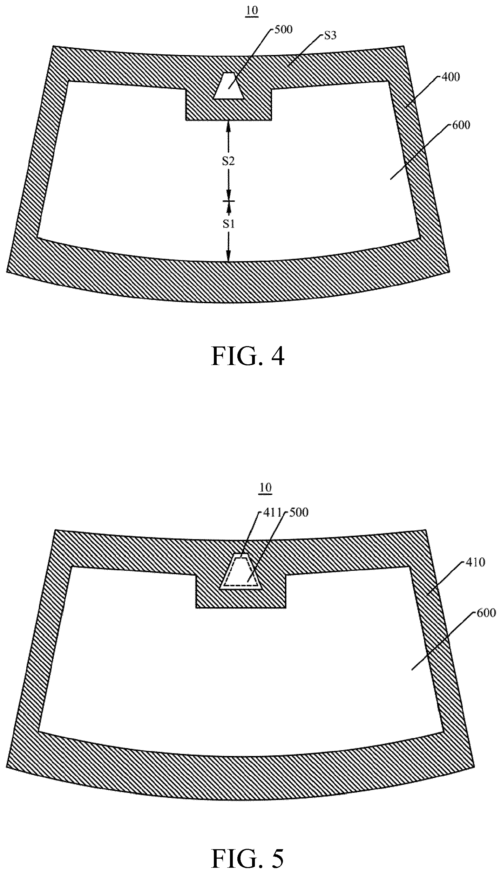

In the case where the information collection system is a camera, a window required by the information collection system is a camera window. Referring to FIG. 3 and FIG. 4, the first masking layer 410 defining the first window 411 and/or the second masking layer 420 defining the second window 421 cooperatively define a camera window 500. An area of the masking layer 400 where the first window 411 is defined corresponds to the information collection area S3, and an area of the masking layer 400 where the second window 421 is defined corresponds to the information collection area S3. An inner edge of the masking layer 400 defines a display area 600. The display area 600 may be divided into the first HUD area S1 and the second HUD area S2. The projection light source is configured to project light onto the first HUD area S1 to perform short-range display and to project light onto the second HUD area S2 to perform long-range display, where the short-range display is W-HUD, and the long-range display is AR-HUD.

In the embodiment, by defining the first window 411 on the first masking layer 410 and defining the second window 421 on the second masking layer 420, the first window 411 and the second window 421 are used to cooperatively determine a size of the window required by the information collection system. That is, the first masking layer 410 having the first window 411 and the second masking layer 420 having the second window 421 cover and overlap each other to determine the size of the window required by the information collection system. In other words, the first window 411 and the second window 421 cover each other to cooperatively define the camera window 500. In the case where, the information collection system (for example, the camera) is mounted, an area for mounting the holder of the camera corresponds to the camera window 500. The camera window 500 is an optical transmission area and serves as a window area for the camera. In general arrangement, the masking layer may be printed to extend to the vicinity of the area for mounting the holder of the camera, and surround a periphery of the camera window 500. In the case where the laminated glass 10 serves as a windshield of the vehicle, each of the first glass panel 100 and the second glass panel 200 is typically a bent glass panel, which is formed by bending a glass panel through high-temperature heat treatment at a temperature of at least 550°C. A main method for heating a glass panel is to apply thermal radiation onto the glass panel in a heating furnace via a heating element. The masking layer 400 is typically made of dark ink. An absorption capacity of the masking layer 400 for thermal radiation is significantly different from an absorption capacity of the glass panel for thermal radiation, thus a temperature in an area printed with the masking layer is higher than a temperature in an area where no masking layer is printed, creating temperature gradients in different parts of the glass panel. The temperature gradients lead to differences in the kinetics during bending and forming of the glass panel, resulting in optical distortions or aberrations around a boundary between an area printed with the masking layer and an area of the camera window 500 without the masking layer, which are particularly pronounced near the boundary. This, in turn, can affect the optical quality of the camera window 500. In embodiments of the disclosure, the first masking layer 410 and the second masking layer 420 are utilized to cover each other to cooperatively define the camera window 500, thereby avoiding the problem of optical distortion that occurs to the masking layer in general arrangement.

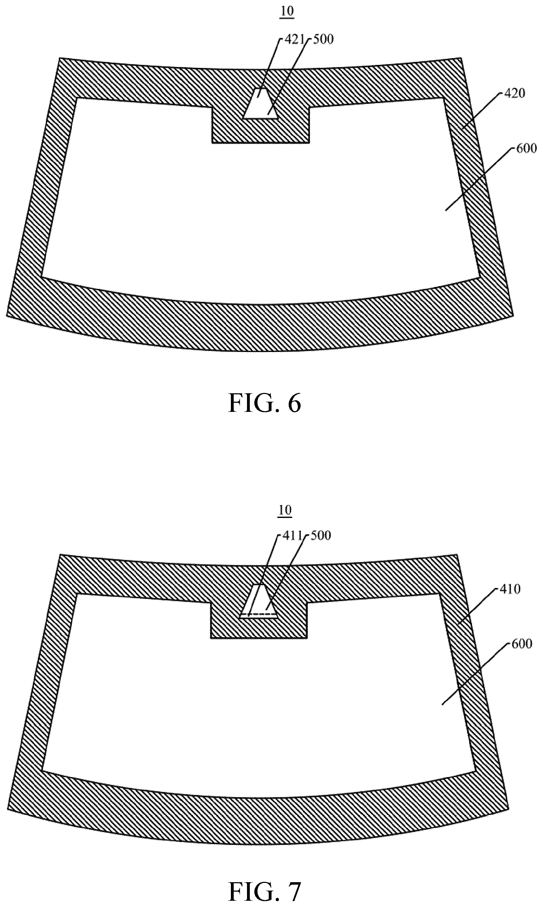

In an embodiment, referring to FIG. 5 and FIG. 6, the first window 411 in FIG. 5 and the second window 421 in FIG. 6 are used to cooperatively define the camera window 500. The first masking layer 410 is typically made of dark ink, such as black ink and brown ink. After the first masking layer 410 is printed on the second surface 120 of the first glass panel 100, the first masking layer 410 is cured by performing high-temperature heat treatment on the first masking layer 410 and the first glass panel 100 at a temperature of at least 550 °C. A size of the first window 411 defined on the first masking layer 410 is larger than the size of the camera window 500 (illustrated by a dotted line in FIG. 5) in at least one direction. In FIG. 5, the size of the first window 411 is larger than the size of the camera window 500 in all four directions: top, bottom, left, and right. That is, an upper border, lower border, left border, and right border of the first window 411 exceed borders of the camera window 500, respectively. In some embodiments, a minimum distance between a border of the first window 411 and a border of the camera window 500 is greater than or equal to 20 mm. That is, the size of the first window 411 is larger than the size of the camera window 500 in at least one direction by a minimum distance greater than or equal to 20 mm, ensuring that optical distortion in the vicinity of borders of the first window 411 may not affect the camera window 500. A size of the second window 421 defined on the second masking layer 420 is equal to the size of the camera window 500. In FIG. 6, the second window 421 coincides with the camera window 500, and the first window 411 and the second window 421 cooperatively define the camera window 500. The second glass panel 200 may serve as an inner glass. In the case where a thickness of the inner glass is less than or equal to 1.1 mm, bending and forming of the inner glass may be achieved through a cold molding process instead of high-temperature heat treatment at 550 °C, and then the inner glass can be bonded to the first glass panel 100 bent and formed to finally achieve bending and forming of the laminated glass 10. The second glass panel 200 does not require high-temperature heat treatment, so that the second masking layer 420 disposed on the second glass panel 200 also does not require high-temperature heat treatment, and thus the second window 421 defined on the second masking layer 420 will not cause optical distortion. The first window 411 illustrated in FIG. 5 and the second window 421 illustrated in FIG. 6 are set to overcome the problem of optical distortion in the window 500 formed.

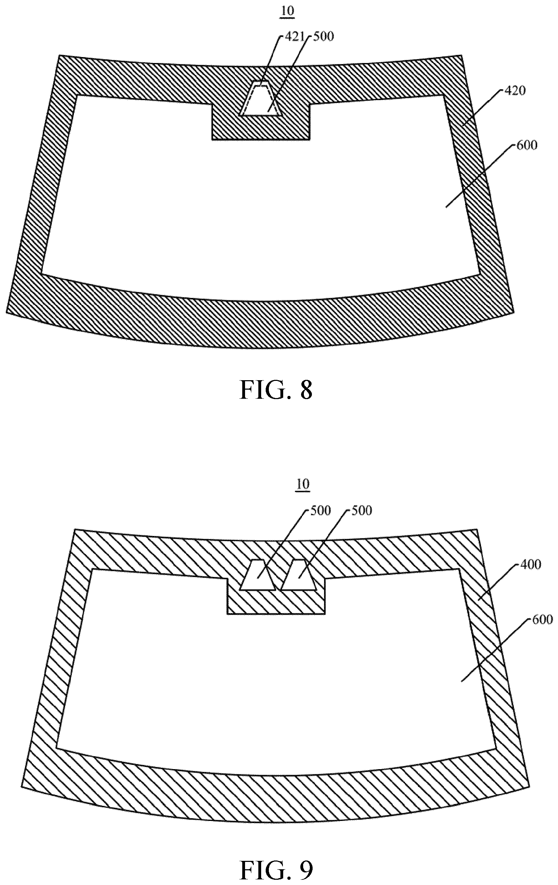

In another embodiment, referring to FIG. 7 and FIG. 8, the first window 411 in FIG. 7 and the second window 421 in FIG. 8 are used to cooperatively define the camera window 500. The size of the first window 411 defined on the first masking layer 410 is larger than the size of the camera window 500 (illustrated by a dotted line in FIG. 7) in at least one direction. In FIG. 7, the size of the first window 411 is larger than the size of the camera window 500 in a downward direction. A minimum distance between the lower border of the first window 411 and the lower border of the camera window 500 (illustrated by a dotted line in FIG. 7) is greater than or equal to 20 mm, the upper border of the first window 411 coincides with the upper border of the camera window 500, the left border of the first window 411 coincides with the left border of the camera window 500, and the right border of the first window 411 coincides with the right border of the camera window 500. After the first masking layer 410 is printed on the second surface 120 of the first glass panel 100, the first masking layer 410 will undergo a high-temperature heat treatment at a temperature of at least 550 °C along with the first glass plate 100. Since the minimum distance between the lower border of the first window 411 and the lower border of the camera window 500 is greater than or equal to 20 mm, it may be ensured that optical distortion in the vicinity of the lower border of the first window 411 may not affect the camera window 500. The size of the second window 421 defined on the second masking layer 420 is larger than the size of the camera window 500 in at least one direction. In FIG. 8, a size of the upper border of the second window 421 is larger than a size of the upper border of the camera window 500. A minimum distance between the upper border of the second window 421 and the upper border of the camera window 500 is greater than or equal to 20 mm. A size of the left border of the second window 421 is larger than a size of the left border of the camera window 500. A minimum distance between the left border of the second window 421 and the left border of the camera window 500 is greater than or equal to 20 mm. A size of the right border of the second window 421 is larger than a size of the right border of the camera window 500. A minimum distance between the right border of the second window 421 and the right border of the camera window 500 is greater than or equal to 20 mm. After the second masking layer 420 is printed on the third surface 210 of the second glass panel 200 or the fourth surface 220 of the second glass panel 200, the second masking layer 420 will undergo a high-temperature heat treatment at 550° C along with the second glass panel 200. The minimum distance between the upper border of the second window 421 and the upper border of the camera window 500, the minimum distance between the left border of the second window 421 and the left border of the camera window 500, and the minimum distance between the right border of the second window 421 and the right border of the camera window 500 all are greater than or equal to 20 mm, so that it may be ensured that optical distortions in the vicinity of the upper border, the left border, and the right border of the second window 421 may not affect the camera window 500. The first window 411 illustrated in FIG. 7 and the second window 421 illustrated in FIG. 8 are set to overcome the problem of optical distortion in the window 500 formed.

It may be understood that the number of information collection systems is not limited in the disclosure, i.e., the number of first windows 411 defined on the first masking layer 410 and/or the number of second windows 421 defined on the second masking layer 420 are not limited. For example, two first windows 411 and two second windows 421 are defined, so that two camera windows 500 may be eventually defined. As illustrated in FIG. 9, each camera window 500 provides an opening area for one information collection system.

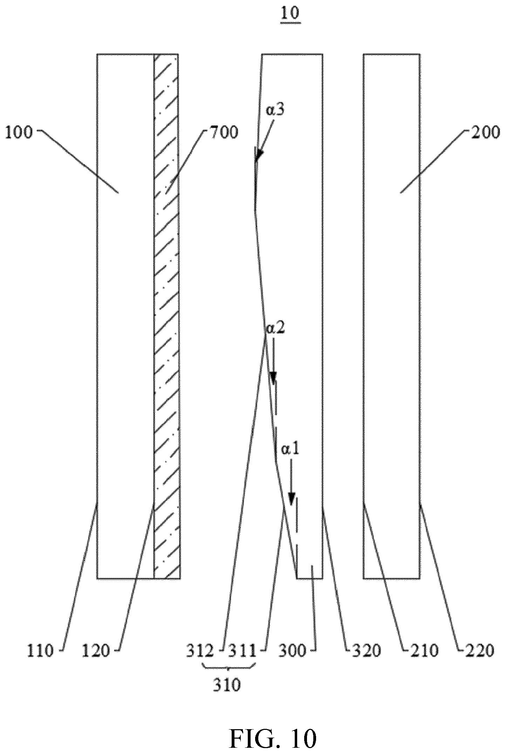

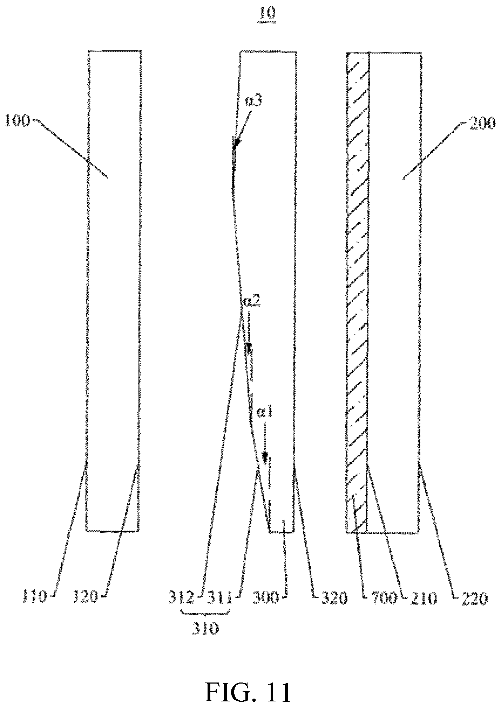

Referring to FIG. 10 and FIG. 11, in an embodiment, the laminated glass 10 further includes a transparent conductive film 700. The transparent conductive film 700 may be disposed on the second surface 120 of the first glass panel 100 close to the polymer interlayer 300. As illustrated in FIG. 10, in the embodiment, the second surface 120 of the first glass panel 100 is adhered and attached to one surface of the transparent conductive film 700, the other side of the transparent conductive film 700 is adhered and attached to the first surface 310 of the polymer interlayer 300, and the second surface 320 of the polymer interlayer 300 is adhered and attached to the third surface 210 of the second glass panel 200. Alternatively, the transparent conductive film 700 may be disposed on the third surface 210 of the second glass panel 200 close to the polymer interlayer 300. As illustrated in FIG. 11, in the embodiment, the second surface 120 of the first glass panel 100 is adhered and attached to the first surface 310 of the polymer interlayer 300, the second surface 320 of the polymer interlayer 300 is adhered and attached to one side of the transparent conductive film 700, and the other side of the transparent conductive film 700 is adhered and attached to the third surface 210 of the second glass panel 200. The transparent conductive film 700 may be deposited on the second surface 120 or the third surface 210 by vapor deposition, such as magnetron sputtering. In some embodiments, selection of a material of the transparent conductive film 700 needs to consider that the material is able to withstand high-temperature heat treatment, for example, heat treatment of a bending process such as bending or tempering. Specifically, the transparent conductive film 700 may be made of a metal coating, a metal alloy coating, or a transparent conductive oxide coating. The metal coating may be made of gold (Au), silver (Ag), copper (Cu), aluminum (Al), etc. For example, the metal coating may be made of a silver-based coating, where the silver-based coating may be multilayer, i.e., the silver-based coating contains at least one silver layer, such as a silver layer (single silver), two silver layers (double silver), or three silver layers (three silver). The metal alloy coating may be made of a silver alloy. The transparent conductive oxide coating may be made of indium tin oxide (ITO), fluorine-doped tin dioxide (FTO), aluminum-doped tin dioxide, gallium-doped tin dioxide, boron-doped tin dioxide, tin-zinc oxide, or antimony-doped tin oxide. The transparent conductive film 700 can reflect infrared rays, so that the laminated glass 10 may have a heat insulation function, and in the case where the laminated glass 10 serves as a windshield of the vehicle, driving comfort may be improved.

In an embodiment, the laminated glass 10 further includes an external power supply, where the external power supply is electrically connected to the transparent conductive film 700, so that the laminated glass 10 may have an electric heating function to defrost, defog, de-ice, and de-snow, thereby ensuring driving safety. Specifically, the transparent conductive film 700 may be electrically connected to the external power supply through a conductive bus bar. The conductive bus bar is in direct electrical contact with the transparent conductive film 700, and a current of the external power supply may be input into the transparent conductive film 700 through the conductive bus bar, so that a heated zone is formed, and thus a surface temperature of the transparent conductive film 700 can be rapidly increased, thereby removing frost, fog, ice, snow, and the like in the vicinity of the surface of the laminated glass 10. The conductive bus bar may be made of metal foil and/or a conductive silver paste, or the like, where the metal foil may specifically be gold foil, silver foil, copper foil, aluminum foil, etc.

In an embodiment, the second glass panel 200 serving as the inner glass has a thickness less than or equal to 1.8 mm, or even less than or equal to 1.1 mm, or further even less than or equal to 0.7 mm, which facilitates a reduction in or even elimination of an adverse effect of the transparent conductive film 700 on the image of short-range display and the image of long-range display, where the short-range display is W-HUD, and the long-range display is AR-HUD.

Referring to FIG. 12, an HUD system is further provided in the disclosure. The HUD system includes the laminated glass 10 and a projection light source 20. The projection light source 20 is configured to generate at least one light beam 30, and the at least one light beam 30 is projected onto the laminated glass 10 to form at least one projection display image. In some embodiments, the projection light source 20 is configured to generate at least a first light beam 31 and a second light beam 32, where a projection distance for the first light beam 31 is not equal to a projection distance for the second light beam 32. The first light beam 31 is projected onto the first HUD area S1 to form a first image, for example, the first image is an image of short-range display, where the short-range display is W-HUD of static information such as a driving speed, a driving distance, and a warning alert. The second light beam 32 is projected onto the second HUD area S2 to form a second image, for example, the second image is an image of long-range display, where the long-range display is AR-HUD of information such as real-time lane display, a navigation prompt, and a marker of a real scene ahead.

Referring to FIG. 12 and FIG. 13, a light area L1 (e.g., a dotted box area) of the first HUD area S1 where the projection light source 20 projects light onto and a light area L2 (e.g., a solid box area) of the second HUD area S2 where the projection light source 20 projects light onto partially overlap to form an overlapping area L3. The overlapping area L3 is located at a junction of the first HUD area S1 and the second HUD area S2, so that real-time display in the first HUD area S1 (W-HUD area) and real-time display in the second HUD area S2 (AR-HUD area) may be merged. That is, the light area L1, where a light beam is projected onto, is located at an area of the laminated glass 10 corresponding to the first HUD area S1 and extends to part of an area of the laminated glass 10 corresponding to the second HUD area S2, and the light area L2, where a light beam is projected onto, is located at the area of the laminated glass 10 corresponding to the second HUD area S2 and extends to part of the area of the laminated glass 10 corresponding to the first HUD area S1. The overlapping area L3 has a height H less than 150 mm in a direction from the upper side of the laminated glass 10 to the lower side of the laminated glass 10. The height H of the overlapping area 630 is set to be less than 150 mm, so that it may be ensured that attention of a driver may not be distracted, and thus driving safety may be ensured.

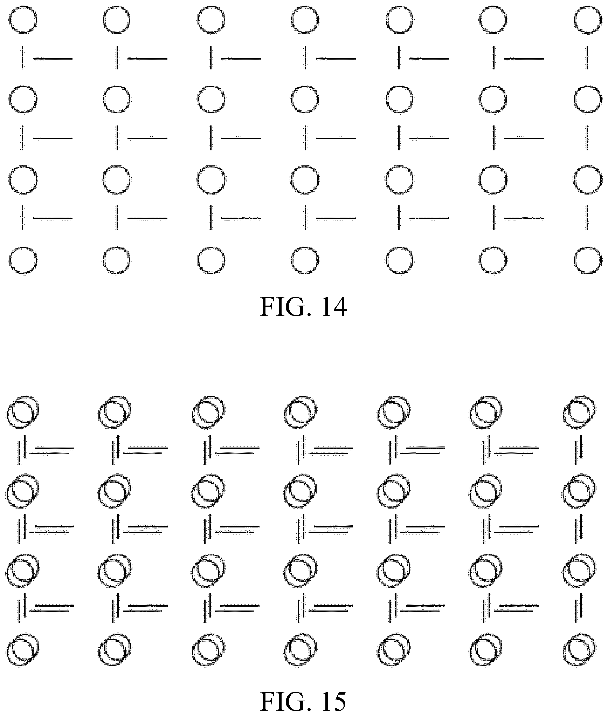

A first projection display image formed by projecting the first light beam 31 onto the first HUD area S1 and a second projection display image formed by projecting the second light beam 32 onto the second HUD area S2 partially overlap to form the overlapping area L3. In part of the first HUD area S1 except the overlapping area L3 and part of the second HUD area S2 except the overlapping area L3, image display is performed normally, for example, an HUD image illustrated in FIG. 14 is normally displayed, and real-time display of the first projection display image and real-time display of the second projection display image are merged in the overlapping area 630.

In another embodiment, the height H of the overlapping area L3 in the direction from the upper side of the laminated glass 10 to the lower side of the laminated glass 10 is greater than 10 mm and less than 150 mm. The overlapping area L3 covers an interface between the first HUD area S1 and the second HUD area S2. The height H of the overlapping area L3 in the direction from the upper side of the laminated glass 10 to the lower side of the laminated glass 10 is set to be greater than 10 mm and less than 150 mm, i.e., 10 mm < H < 150 mm, so that smooth transition from the first HUD area S1 to the second HUD area S2 may be ensured, and deformation at an upper side of the first projection display image displayed in the first HUD area S1 and deformation at a lower side of the second projection display image displayed in the second HUD area S2 as illustrated in FIG. 15 may be effectively avoided.

Referring to FIGS. 3, 12, and 13, in an embodiment, the HUD system further includes an information collection system 40. The laminated glass 10 has the information collection area S3, where the information collection area S3 is disposed above and adjacent to the second HUD area S2. The information collection area S3 defines an opening area (for example, the camera window 500) for information collection of the information collection system 40. The information collection system 40 is mounted to or near the fourth surface 220 of the laminated glass 10. The laminated glass 10 has the camera window 500 in an area of the laminated glass 10 corresponding to the information collection area S3. A light ray from outside of the vehicle can reach the information collection system 40 through the camera window 500, and the information collection system 40 can perform information collection via the information collection area S3. In the case where the information collection area S3 has a reverse wedge angle, it can be ensured that the information collection system 40 may not generate a double image.

The above embodiments are only optimal embodiments of the disclosure, and the above embodiments cannot limit the scope of the disclosure. The ordinary skill in the field can understand all or a part of the process that realizes the above embodiments of the disclosure, and equivalent changes made in accordance with the claims of the disclosure still belong to the scope of the disclosure covered.

## Claims

1. A laminated glass for head up display (HUD), comprising a first glass panel, a second glass panel, and a polymer interlayer sandwiched between the first glass panel and the second glass panel, wherein
the laminated glass has an upper side and a lower side, the laminated glass has a first HUD area and a second HUD area arranged in a direction from the lower side of the laminated glass to the upper side of the laminated glass, and the first HUD area and the second HUD area are both used for projection display of a projection light source;
a projection distance for projection display from the projection light source to the first HUD area ranges from 1 meter to 5 meters, and a projection distance for projection display from the projection light source to the second HUD area is greater than or equal to 7 meters;
the first HUD area has a wedge-shaped cross section and a first wedge angle, wherein an upper side of the wedge-shaped cross section is thicker than a lower side of the wedge-shaped cross section; and the second HUD area has a wedge-shaped cross section and a second wedge angle, wherein an upper side of the wedge-shaped cross section is thicker than a lower side of the wedge-shaped cross section; and
the first HUD area is adjacent to the second HUD area, and the first wedge angle is greater than the second wedge angle.

2. The laminated glass of claim 1, wherein a difference between the first wedge angle and the second wedge angle ranges from 0.05 mrad to 0.2 mrad.

3. The laminated glass of claim 1, wherein the first wedge angle is greater than or equal to 0.3 mrad, and the second wedge angle is greater than or equal to 0.05 mrad and less than 0.3 mrad.

4. The laminated glass of claim 1, further having an information collection area, wherein the information collection area defines an opening area for information collection of an information collection system, the information collection area is disposed above and adjacent to the second HUD area; and the information collection area has a reverse wedge-shaped cross section and a third wedge angle, wherein an upper side of the reverse wedge-shaped cross section is thinner than a lower side of the reverse wedge-shaped cross section, and the third wedge angle is greater than or equal to -0.05 mrad and less than 0 mrad.

5. The laminated glass of claim 1, further having an information collection area, wherein the information collection area defines an opening area for information collection of an information collection system, the information collection area is disposed above and adjacent to the second HUD area; and the information collection area has a uniform-thickness cross section, wherein a thickness of an upper side of the uniform-thickness cross section is equal to a thickness of a lower side of the uniform-thickness cross section.

6. The laminated glass of claim 1, further having an information collection area, wherein the information collection area defines an opening area for information collection of an information collection system, the information collection area is disposed above and adjacent to the second HUD area; and the information collection area has a wedge-shaped cross section and a third wedge angle, wherein an upper side of the wedge-shaped cross section is thicker than a lower side of the wedge-shaped cross section, the third wedge angle is greater than 0 mrad and less than or equal to 0.05 mrad, and the second wedge angle is greater than the third wedge angle.

7. The laminated glass of any one of claims 1 to 6, wherein
the first glass panel has a first surface and a second surface opposite the first surface, the second surface faces the polymer interlayer, the second glass panel has a third surface and a fourth surface opposite the third surface, and the third surface faces the polymer interlayer; and
the laminated glass further comprises a masking layer, wherein the masking layer comprises at least one of a first masking layer or a second masking layer, the first masking layer is attached to a periphery of the second surface, the second masking layer is attached to a periphery the third surface or a periphery of the fourth surface, the first masking layer defines a first window, the second masking layer defines a second window, and the first window or the second window is used to provide an opening area for information collection of an information collection system.

8. The laminated glass of claim 7, comprising the first masking layer and the second masking layer, wherein a size of the first window is larger than a size of an opening required by the information collection system in at least one direction; and a size of the second window is equal to the size of the opening required by the information collection system, or the size of the second window is larger than the size of the opening required by the information collection system in at least one direction.

9. The laminated glass of any one of claims 1 to 6, wherein
the first glass panel has a first surface and a second surface opposite the first surface, the second surface faces the polymer interlayer, the second glass panel has a third surface and a fourth surface opposite the third surface, and the third surface faces the polymer interlayer; and
the laminated glass further comprises a transparent conductive film, wherein the transparent conductive film is disposed on the second surface of the first glass panel facing the polymer interlayer or on the third surface of the second glass panel facing the polymer interlayer.

10. The laminated glass of claim 9, further comprising an external power supply, wherein the external power supply is electrically connected to the transparent conductive film.

11. The laminated glass of any one of claims 1 to 6, wherein the polymer interlayer comprises at least two polymer layers, and a content of plasticizer in a first polymer layer of the at least two polymer layers is higher than a content of plasticizer in a second polymer layer of the at least two polymer layers.

12. The laminated glass of any one of claims 1 to 6, wherein the second glass panel has a thickness less than or equal to 1.8 mm.

13. The laminated glass of any one of claims 1 to 6, wherein a light area of the first HUD area where the projection light source is configured to project light onto and a light area of the second HUD area where the projection light source is configured to project light onto partially overlap to form an overlapping area, wherein the overlapping area has a height less than 150 mm in a direction from the upper side of the laminated glass to the lower side of the laminated glass.

14. The laminated glass of claim 13, wherein the height of the overlapping area is greater than 10 mm in the direction from the upper side to the lower side.

15. A head up display (HUD) system, comprising a projection light source and the laminated glass of any one of claims 1 to 14, wherein the projection light source is configured to generate at least one light beam, and the at least one light beam is projected onto the laminated glass to form at least one projection display image.

16. The HUD system of claim 15, wherein the projection light source is configured to generate at least a first light beam and a second light beam, wherein a projection distance for the first light beam is not equal to a projection distance for the second light beam, the first light beam is projected onto the first HUD area to form a first HUD image, and the second light beam is projected onto the second HUD area to form a second HUD image.

17. The HUD system of claim 15, further comprising an information collection system, wherein the laminated glass further has an information collection area disposed above and adjacent to the second HUD area, and the information collection system is configured to perform information collection via the information collection area.
